Europäisches Patentamt

European Patent Office

Office européen des brevets

(11) Veröffentlichungsnummer: **0 433 701 A2**

# (12) EUROPÄISCHE PATENTANMELDUNG

(21) Anmeldenummer: 90122480.8

(22) Anmeldetag: 26.11.90

(51) Int. Cl.5: **F16F 9/34**, F16F 9/46

(30) Priorität: 22.12.89 DE 3942545

(43) Veröffentlichungstag der Anmeldung:
26.06.91 Patentblatt 91/26

(84) Benannte Vertragsstaaten:
DE ES FR GB

(71) Anmelder: ROBERT BOSCH GmbH
Postfach 10 60 50
W-7000 Stuttgart 10(DE)

(72) Erfinder: Taubitz, Bernd
Hermann-Essig-Strasse 106
W-7141 Schwieberdingen(DE)
Erfinder: Gawlik, Rolf, Dipl.-Ing. (FH)
Hebelstrasse 6/1
W-7141 Beilstein(DE)
Erfinder: Weisser, Roland, Dipl.-Ing. (FH)
Hauptstrasse 14
W-7731 Unterkirnach(DE)
Erfinder: Troltsch, Karl
Battnerstrasse 12
W-7141 Schwieberdingen(DE)

(54) Druckbetätigtes Ventil.

(57) Bei einem bekannten druckbetätigten Ventil ist, um eine große Durchflußöffnung freigeben zu können, eine große Kraft und damit eine starke Feder zum Verschließen dieser Durchflußöffnung erforderlich.

Bei dem neuen, erfindungsgemäßen druckbetätigten Ventil (60) ist eine wirksame Druckfläche (85), d. h. die Fläche auf der eine das Ventil öffnende Druckdifferenz wirkt, vollständig unabhängig von der öffenbaren Durchflußöffnung (100). Die wirksame Druckfläche (85) und die öffenbare Durchflußöffnung (100) können unabhängig voneinander in weiten Grenzen beliebig gewählt werden.

Das erfindungsgemäße druckbetätigte Ventil ist vorzugsweise für Stoßdämpfer geeignet.

FIG.1

# DRUCKBETÄTIGTES VENTIL

## Stand der Technik

Die Erfindung betrifft ein druckbetätigtes Ventil nach der Gattung des Hauptanspruchs. Das druckbetätigte Ventil umfaßt einen Ventilkörper, der von einem Federelement in Schließrichtung gegen einen Ventilsitz betätigt wird. Sitzt der Ventilkörper auf seinem Ventilsitz, so ist eine Durchflußöffnung geschlossen und es wird eine einen zuströmseitigen Druck enthaltende Kammer von einer einen abströmseitigen Druck enthaltendenen Kammer getrennt.

Der Ventilkörper kann, je nach Druckdifferenz zwischen dem zuströmseitigen Druck und dem abströmseitigen Druck, die Durchflußöffnung verschließen, d. h. der Ventilkörper deckt die Durchflußöffnung ab. Der zuströmseitige Druck wirkt im Bereich der Durchflußöffnung auf den Ventilkörper. Der die Durchflußöffnung abdeckende Teil des Ventilkörpers stellt eine wirksame Druckfläche für den zuströmseitigen Druck dar. Erreicht der zuströmseitige Druck einen bestimmten Wert, so kann dieser Druck den Ventilkörper entgegen der Schließkraft des Federelementes von dem Ventilsitz abheben und es kann Druckmedium aus der ersten Kammer in die zweite Kammer strömen. Soll auch ein großer Druckmediumstrom aus der ersten Kammer in die zweite Kammer strömen können, ohne daß der Druckmediumstrom im Bereich der Durchflußöffnung zu stark angedrosselt wird, so muß die Durchflußöffnung entsprechend groß sein. Ist die Durchflußöffnung groß, so muß, damit das auf den Ventilkörper wirkende Federelement die Durchflußöffnung verschließen kann, das Federelement entsprechend dimensioniert sein. Je größer die Durchflußöffnung ist, umso stärker muß das Federelement sein, um den zuströmseitigen Druck auf einem gewünschten Wert halten zu können.

Sollen bei dem bekannten druckbetätigten Ventil hohe Drücke abgesichert werden können, ohne daß bei großen Durchflußströmen eine zu starke Androsselung des Druckmediumstromes erfolgt, so ist ein starkes Federelement erforderlich, was ein sehr groß und massereich bauendes druckbetätigtes Ventil zur Folge hat.

Bei dem bekannten druckbetätigten Ventil kann das Druckmedium nur aus einer bestimmten Kammer in die andere Kammer strömen. Das druckbetätigte Ventil hat, bezogen auf diese allein mögliche Durchflußrichtung, die Funktion eines sogenannten Druckhalteventils bzw. Druckbegrenzungsventils bzw. Sicherheitsventils. Eine Durchströmung des bekannten druckbetätigten Ventils in entgegengesetzter Richtung ist nicht möglich.

## Vorteile der Erfindung

Das druckbetätigte Ventil mit den kennzeichnenden Merkmalen des Hauptanspruchs weist demgegenüber den Vorteil auf, daß mit einem relativ schwachen und deshalb kleinbauenden Federelement ein großer Druck bei gleichzeitig großer möglicher Durchflußöffnung abgesichert werden kann.

Durch die in den Unteransprüchen aufgeführten Maßnahmen sind vorteilhafte Weiterbildungen und Verbesserungen des druckbetätigten Ventils möglich.

Durch einen bei sich öffnendem druckbetätigten Ventil in einer Zwischenkammer sich ausbildenden Zwischendruck erhält man den Vorteil, daß bei zunehmendem Druckmediumstrom der zuströmseitige Druck, je nach Wunsch, mehr oder weniger konstant bleibt. Es ist sogar möglich, daß bei zunehmendem Druckmediumstrom der zuströmseitige Druck abnimmt. Es ist eine Frage der Dimensionierung.

Das druckbetätigte Ventil hat den Vorteil, daß es so gebaut werden kann, daß es in beide Strömungsrichtungen durchströmbar ist. Das Ventil kann in vorteilhafter Weise so gebaut werden, daß die Druckdifferenz im Bereich des Ventils für beide Strömungsrichtungen gleich groß ist oder, je nach Dimensionierung, kann auch die jeweilige Druckdifferenz für beide Strömungsrichtungen verschieden gewählt werden.

Da zur Absicherung des jeweils zuströmseitigen Druckes für beide Strömungsrichtungen nur ein Federelement erforderlich ist, ist das Ventil sehr einfach und baut klein.

Da das druckbetätigte Ventil in vorteilhafter Weise relativ klein und leicht baut, ist es in besonderem Maße zur Absicherung eines zwischen Arbeitsräumen eines Dämpfungssystems, insbesondere eines Stoßdämpfers, sich austauschenden Druckmediumstromes geeignet. Das druckbetätigte Ventil kann bei dem Stoßdämpfer in vorteilhafter Weise die Dämpfungskraft beeinflussen. Es kann dabei als alleiniges Ventil in dem Stoßdämpfer vorhanden sein oder es kann z. B. als zusätzliches Sicherheitsventil parallel neben einem anderen Ventil, z. B. einem elektromagnetisch betätigbaren Ventil vorhanden sein. Das druckbetätigte Ventil kann hierbei so angewendet werden, daß es, sobald in einem der Arbeitsräume ein zu großer Druck herrscht, es einen Weg in den jeweils anderen Arbeitsraum öffnet. Je nach Ausgestaltung des druckbetätigten Ventils können mit einem einzigen druckbetätigten Ventil beide Strömungsrichtungen abgesichert werden.

Zeichnung

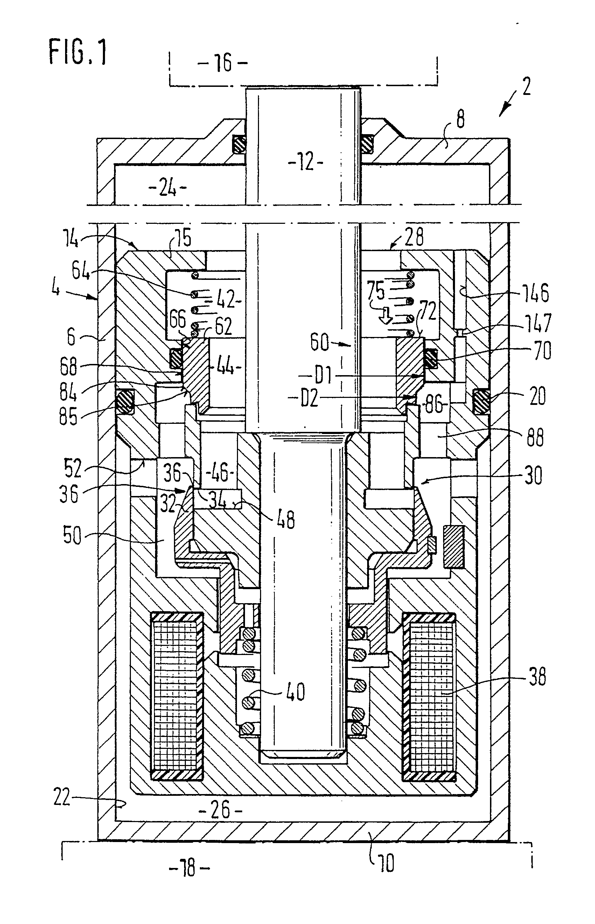

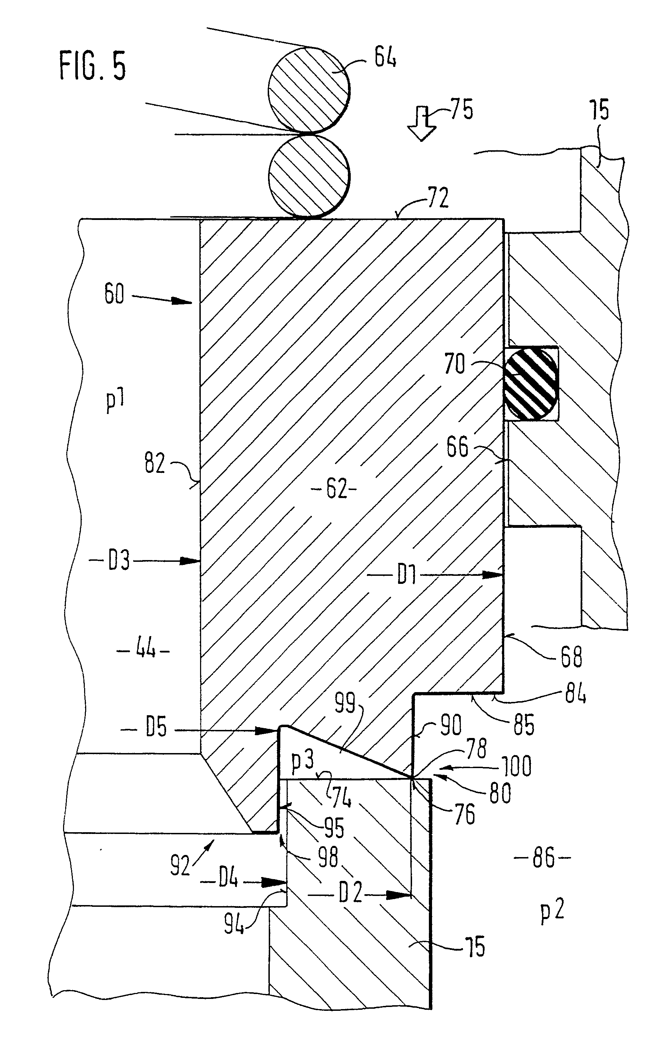

Vier Ausführungsbeispiele der Erfindung sind in der Zeichnung vereinfacht dargestellt und in der nachfolgenden Beschreibung näher erläutert. Es zeigen die Figuren 1 bis 4 je ein Ausführungsbeispiel und die Figuren 5 bis 7 spezielle Einzelheiten.

Beschreibung der Ausführungsbeispiele

Das erfindungsgemäße, druckbetätigte Ventil kann in jedweder Anlage, in der ein Druck eines Druckmediums abgesichert bzw. eine Druckdifferenz zwischen einem zuströmseitigen und einem abströmseitigen Druck des Druckmediums abgesichert, eingestellt oder gesteuert werden soll, eingesetzt werden. Obwohl nicht allein darauf beschränkt, wurde in den Ausführungsbeispielen der vorliegenden Patentanmeldung für das erfindungsgemäße, druckbetätigte Ventil ein Stoßdämpfer als Anwendungsbeispiel gewählt.

Die Figur 1 zeigt das erste Ausführungsbeispiel. Ein Stoßdämpfer 2 hat einen Zylinder 4 mit einem abschnittsweise dargestellten Mantelrohr 6 mit einer ersten Stirnseite 8 und mit einer zweiten Stirnseite 10. Aus der ersten Stirnseite 8 des Mantelrohres 6 ragt eine Kolbenstange 12 heraus. Von der Kolbenstange 12 sind nur deren beiden Enden dargestellt. Die Kolbenstange 12 ist mit einem Ende mit einem abgestuften Dämpferkolben 14 verbunden und mit einem anderen Ende ist sie an einer strichpunktiert angedeuteten ersten Masse 16 angelenkt. Das heißt, der Dämpferkolben 14 ist mit der ersten Masse 16 verbunden. Der Dämpferkolben 14 umfaßt ein Gehäuse 15. Die zweite Stirnseite 10 ist mit einer strichpunktiert angedeuteten zweiten Masse 18 verbunden. Die erste Masse 16 ist beispielsweise ein Fahrzeugaufbau und die zweite Masse 18 ist z. B. eine Fahrzeugachse. Der Dämpferkolben kann unter Zwischenlage eines Führungsringes 20 an einer inneren Mantelfläche 22 des Mantelrohres 6 axial gleiten. Der Führungsring 20 hat gleichzeitig die Aufgabe einer Dichtung. Ein Innenraum des Zylinders 4 wird durch den Dämpferkolben 14 in einen ersten Arbeitsraum 24 und in einen zweiten Arbeitsraum 26 unterteilt. In der Zeichnung befindet sich der erste Arbeitsraum 24 oberhalb und der zweite Arbeitsraum 26 unterhalb des Dämpferkolbens 14. Die Arbeitsräume 24, 26 sind zumindest teilweise mit einem Druckmedium gefüllt.

Die beiden Arbeitsräume 24, 26 sind über eine Strömungsverbindung 28 miteinander verbunden. Im Verlauf der Strömungsverbindung 28 ist eine Drosselstelle 30 vorgesehen. Die Drosselstelle 30 kann durch Betätigen eines Steuerschiebers 32 verändert werden. An dem Gehäuse 15 des Dämpferkolbens 14 gibt es eine feststehende Steuerkante 34. Der Steuerschieber 32 ist stirnseitig mit einer Schiebersteuerkante 36 versehen. Durch Bestromen einer Magnetspule 38 kann der Steuerschieber 32 in axialer Richtung entgegen einer Kraft einer Feder 40 betätigt werden. Mit zunehmender Bestromung der Magnetspule 38 hebt die Schiebersteuerkante 36 des Steuerschiebers 32 zunehmend von der feststehenden Steuerkante 34 ab; d. h. bei zunehmender Bestromung der Magnetspule 38 wird eine Querschnittsfläche an der Drosselstelle 30 vergrößert. Bei nicht bestromter Magnetspule 38 ist die Drosselstelle 30 geschlossen bzw. die Querschnittsfläche erreicht ihr Minimum.

Die Strömungsverbindung 28 umfaßt einen Federraum 42, eine Kammer 44, Längsöffnungen 46, einen Nuteinstich 48, die Drosselstelle 30, einen Schieberraum 50 und Queröffnungen 52. Ist der Druck im ersten Arbeitsraum 24 größer als im zweiten Arbeitsraum 26, so kann, in Abhängigkeit der Stellung des Steuerschiebers 32, das Druckmedium durch die Strömungsverbindung 28 in der Reihenfolge der Aufzählung strömen. Ist der Druck in dem zweiten Arbeitsraum 26 größer als in dem ersten Arbeitsraum 24, dann durchströmt das Druckmedium die Strömungsverbindung 28 in umgekehrter Richtung.

Die Querschnittsfläche der Drosselstelle 30 bestimmt eine Dämpfungskraft des Stoßdämpfers 2. Hat der Steuerschieber 32 eine Stellposition, bei der die Querschnittsfläche der Drosselstelle 30 sehr klein ist und wird gleichzeitig eine der Massen 16, 18 sehr schnell gegenüber der jeweils anderen Masse 16, 18 bewegt, so entstehen innerhalb des Stoßdämpfers 2 große Dämpfungskräfte, was bedeutet, daß, je nach Relativbewegung, in einem der beiden Arbeitsräume 24, 26 ein sehr hoher Druck entsteht. Sind keine weiteren Maßnahmen vorgesehen, so kann unter Umständen der Druck in einem der Arbeitsräume 24, 26 ein Maß erreichen, welches zu einem Ausfall des Stoßdämpfers 2 führen könnte bzw. es treten unerwünscht große Dämpfungskräfte auf. Um dies zu verhindern, ist in der Strömungsverbindung 28 des Stoßdämpfers 2 das erfindungsgemäße, druckbetätigte Ventil 60 eingebaut.

Das druckbetätigte Ventil 60 umfaßt einen Ventilkörper 62, ein Federelement 64, ein Dichtelement 70 und mindestens einen den Ventilkörper 62, das Federelement 64 und die Dichtung 70 umgebenden Bereich des Gehäuses 15. Das Federelement 64 kann aus einer Feder oder aus mehreren zusammenarbeitenden Federn bestehen. Am Gehäuse 15 des Dämpferkolbens 14 ist eine zur Kolbenstange 12 in etwa konzentrisch verlaufende Führungsbohrung 66 vorgesehen. Der Ventilkörper 62 hat, grob betrachtet, eine hülsenartige Gestalt mit einem äußeren Führungsmantel 68. Der Ventilkörper 62 ist mit seinem Führungsmantel 68 in der Führungsbohrung 66 des Gehäuses 15 in axialer Richtung verschiebbar gelagert. Damit durch einen zwischen dem Führungsmantel 68 des Ventilkörpers 62 und der Führungsbohrung 66 des Gehäuses 15 gebildeten Spalt kein Druckmedium strömen kann, ist im Bereich der Führungsbohrung 66 ein Nuteinstich eingestochen und in diesen das Dichtelement 70 eingelegt.

Der Ventilkörper 62 ist in der Figur 1 quer zum Umfang, aber längs zu seiner Achse geschnitten dargestellt, wodurch man in der Figur 1 zwei spiegelbildliche Schnittflächen erkennen kann. Zwecks Verdeutlichung ist eine dieser Schnittflächen nochmals in Figur 5 in geändertem Maßstab wiedergegeben. In allen Figuren sind gleiche oder gleichwirkende Teile mit denselben Bezugszeichen versehen.

Der hülsenartige Ventilkörper 62 hat eine sich in den Federraum 42 erstreckende Stirnseite 72. In dem Federraum 42 ist das Federelement 64 eingebaut. Das Federelement 64 wirkt mit seinem einen Federende gegen das Gehäuse 15 des Dämpferkolbens 14 und mit seinem anderen Federende gegen die Stirnseite 72 des Ventilkörpers 62. Das Federelement 64 ist bestrebt, den Ventilkörper 62 mit einer Schließkraft in eine Schließrichtung zu betätigen, bis der Ventilkörper 62 an einem quer zur Schließrichtung verlaufenden Absatz 74 des Gehäuses 15 zur Anlage kommt. Die Schließrichtung ist in der Zeichnung symbolhaft durch einen Pfeil 75 angedeutet. Der Teil des Ventilkörpers 62, der an dem Absatz 74 des Gehäuses 15 zur Anlage kommt, wird nachfolgend als Ventilkörperdichtbereich 76 bezeichnet. Der Teil des Gehäuses 15, an dem der Ventilkörperdichtbereich 76 zur Anlage kommt, wird nachfolgend als Gegendichtbereich 78 bezeichnet. Der Ventilkörperdichtbereich 76 und der Gegendichtbereich 78 bilden im Zusammenspiel eine Dichtstelle 80.

Der Führungsmantel 68 des Ventilkörpers 62 hat einen mit D1 bezeichneten Durchmesser. Die Dichtstelle 80 zwischen dem Absatz 74 des Gehäuses 15 und dem Ventilkörper 62 verläuft kreisringförmig und hat einen mit D2 bezeichneten Durchmesser. Der Ventilkörper 62 hat einen zum Führungsmantel 68 in etwa konzentrisch verlaufenden inneren Bohrungsmantel 82 mit einem Durchmesser D3.

Da der Durchmesser D2 der Dichtstelle 80 kleiner als der Durchmesser D1 des Führungsmantels 68 des Ventilkörpers 62 ist, wird zwischen dem Führungsmantel 68 und der Dichtstelle 80 ein Absatz 84 gebildet. Der Absatz 84 am Ventilkörper 62 verläuft in der Figur 5 quer zur Schließ- bzw. Öffnungsrichtung; er kann aber auch, wie in der Figur 1 dargestellt, schräg verlaufen. Unabhängig vom Verlauf des Absatzes 84 bzw. der Gestaltung des Ventilkörpers 62 zwischen dem Führungsmantel 68 und der Dichtstelle 80 erhält man aus der Flächendifferenz der Fläche mit dem Durchmesser D1 abzüglich der Fläche mit dem Durchmesser D2 eine wirksame Druckfläche 85. Die wirksame Druckfläche 85 des Ventilkörpers 62 ragt in eine Kammer 86. Die Kammer 86 ist über Längsbohrungen 88 mit dem Schieberraum 50 verbunden. Somit herrscht in der Kammer 86 ein gleicher Druck p2 wie in dem Schieberraum 50 und, wegen den Queröffnungen 52, auch der gleiche Druck p2 wie in dem zweiten Arbeitsraum 26. Die Kammer 86 und die Längsbohrungen 88 sind ebenfalls Bestandteil der Strömungsverbindung 28.

Der in der Kammer 86 herrschende Druck p2 beaufschlagt die wirksame Druckfläche 85 des Ventilkörpers 62. Zwischen dem Absatz 84 und der Dichtstelle 80 kann am Ventilkörper 62 ein zylindrischer Teil 90 vorgesehen sein. Damit kann der in der Kammer 86 herrschende Druck ungehindert bis an die Dichtstelle 80 wirken und der Ventilkörperdichtbereich 76 des Ventilkörpers 62 befindet sich an dem vorzugweise kantenförmig ausgebildeten, dem Gegendichtbereich 78 zugewandten Ende des zylindrischen Teils 90 des Ventilkörpers 62.

In dem Federraum 42, der Kammer 44 und den Längsöffnungen 46 herrscht ein gleicher Druck p1 wie in dem ersten Arbeitsraum 24. Je nach Bewegungsrichtung und Geschwindigkeit des Dämpferkolbens 14 gegenüber dem Zylinder 4 ist der Druck p1 größer als der Druck p2 oder der Druck p1 ist gleich dem Druck p2 oder der Druck p1 ist kleiner als der Druck p2. Der Druck p1 wirkt auf die Stirnseite 72 des Ventilkörpers 62 in die durch den Pfeil 75 symbolisierte Schließrichtung. Der Durchmesser D3 des Bohrungsmantels 82 ist kleiner als der Durchmesser D2 der Dichtstelle 80. Ein zwischen den beiden Durchmessern D2, D3 auf der der Stirnseite 72 abgewandten Seite des Ventilkörpers 62 sich erstreckender ringförmiger Teil wird nachfolgend als Stirnseite 92 bezeichnet. Bei geschlossener Dichtstelle 80 wirkt der Druck p1 auf die gesamte Stirnseite 92 zwischen D2 und D3 in Öffnungsrichtung entgegen dem Pfeil 75.

Angrenzend an den stirnseitigen Absatz 74 des Gehäuses 15 verläuft am Gehäuse 15 ein zylindrischer Absatz 94 mit einem Durchmesser D4. Der Durchmesser D4 ist kleiner als der Durchmesser D2. Die Stirnseite 92 des Ventilkörpers 62 verläuft abgestuft, u. a. wegen einem zylindrischen Absatz 95 mit einem Durchmesser D5. Der Durchmesser D5 ist größer als der Durchmesser D3, aber kleiner als der Durchmesser D2 der Dichtstelle 80. Der Durchmesser D4 ist geringfügig größer als der Durchmesser D5. Der zylindrische Absatz 95 des Ventilkörpers 62 überlappt in axialer Richtung den zylindrischen Absatz 94 des Gehäuses 15, so daß sich zwischen diesen beiden zylindrischen Absätzen 94, 95 eine schmale, ringförmige Drosselstelle 98 bildet. Zwischen der Dichtstelle 80 und der Drosselstelle 98 befindet sich eine Zwischenkammer 99. Da bei geschlossener Dichtstelle 80 durch die Drosselstelle 98 kein Druckmedium strömt, wirkt der in der Kammer 44 herrschende Druck p1 auf die gesamte Stirnseite 92 zwischen dem Durchmesser D2 und dem Durchmesser D3 und somit auch in der Zwischenkammer 99.

Bei geschlossener Dichtstelle 80, d. h. wenn der Ventilkörperdichtbereich 76 des Ventilkörpers 62 an dem Gegendichtbereich 78 des Gehäuses 15 anliegt, wirken auf den Ventilkörper 62 in Schließrichtung (Pfeil 75) folgende Kräfte: Die Schließkraft des Federelementes 64 und die Schließkraft des zwischen dem Durchmesser D1 und dem Durchmesser D3 auf die Stirnseite 72 des Ventilkörpers 62 wirkenden Druckes p1. In Öffnungsrichtung wirken folgende Kräfte: Die Kraft des auf die wirksame Druckfläche 85 zwischen dem Durchmesser D1 und dem Durchmesser D2 des Ventilkörpers 62 wirkenden Druckes p2 und die Kraft des Druckes p1, der auch auf die Stirnseite 92 zwischen dem Durchmesser D2 und dem Durchmesser D3 auf den Ventilkörper 62 in Öffnungsrichtung (entgegen Pfeil 75) wirkt. Bei kleiner Druckdifferenz zwischen p1 und p2 ist, wegen der Schließkraft des Federelementes 64, die Dichtstelle 80 geschlossen. Mit zunehmendem Druck p2 in der Kammer 86 wird die Kraft in Öffnungsrichtung (entgegen Pfeil 75) zunehmend größer bzw. bei abnehmendem Druck p1 in der Kammer 44 wird die Summe der Schließkräfte zunehmend kleiner. Ab einer bestimmten Druckdifferenz zwischen dem Druck p2 und dem Druck p1 hebt der Ventilkörperdichtbereich 76 von dem Gegendichtbereich 78 ab und es öffnet sich zwischen dem Ventilkörperdichtbereich 76 des Ventilkörpers 62 und dem Gegendichtbereich 78 des Gehäuses 15 eine Durchflußöffnung 100. Nun kann Druckmedium aus der Kammer 86 durch die Durchflußöffnung 100 in Richtung der Kammer 44 strömen. Da das Druckmedium aus der Kammer 86 mit dem Druck p2 in die Kammer 44 strömt, kann in diesem Fall der Druck p2 auch als zuströmseitiger Druck bezeichnet werden. Der jeweils andere Druck, hier der Druck p1 in der Kammer 44, kann als abströmseitiger Druck bezeichnet werden. Beim Strömen aus der Kammer 86 in die Kammer 44 wird das Druckmedium im Bereich der Drosselstelle 98 erneut angedrosselt, so daß sich in dem Bereich zwischen dem Durchmesser D2 und dem Durchmesser D5, d. h. in der Zwischenkammer 99 ein Zwischendruck p3 bildet, welcher, je nach Größe der Durchflußöffnung 100 und der Drosselstelle 98, im Bereich zwischen dem Druck p2 und dem Druck p1 liegt. Insbesondere in Abhängigkeit der Überlappung zwischen dem Absatz 95 des Ventilkörpers 62 und dem Absatz 94 des Gehäuses 15 kann, insbesondere bei weit geöffnetem Ventil 60, der Zwischendruck p3 nahezu gleich groß wie der zuströmseitige Druck sein. Da der Zwischendruck p3 größer ist als der Druck p1, wird, sobald im Bereich der Dichtstelle 80 eine gewisse Durchflußfläche 100 geöffnet ist, der Ventilkörper 62 verstärkt in Öffnungsrichtung (entgegen Pfeil 75) gerissen, wodurch sich in vorteilhafter Weise sofort eine sehr große Durchflußöffnung 100 bilden kann. Auch wenn bei Betätigen des Ventilkörpers 62 in Öffnungsrichtung (entgegen Pfeil 75) die Kraft des Federelementes 64 zunimmt, so kann dies doch durch den Zwischendruck p3 weitgehend kompensiert oder, je nach Ausführung der Konstruktion, sogar überkompensiert werden. Bei geeigneter konstruktiver Wahl der Durchmesser kann das druckbetätigte Ventil 60 so ausgeführt sein, daß unabhängig von einer Größe des durchströmenden Druckmediumstromes die Druckdifferenz zwischen dem Druck p2 und dem p1 weitgehend konstant bleibt.

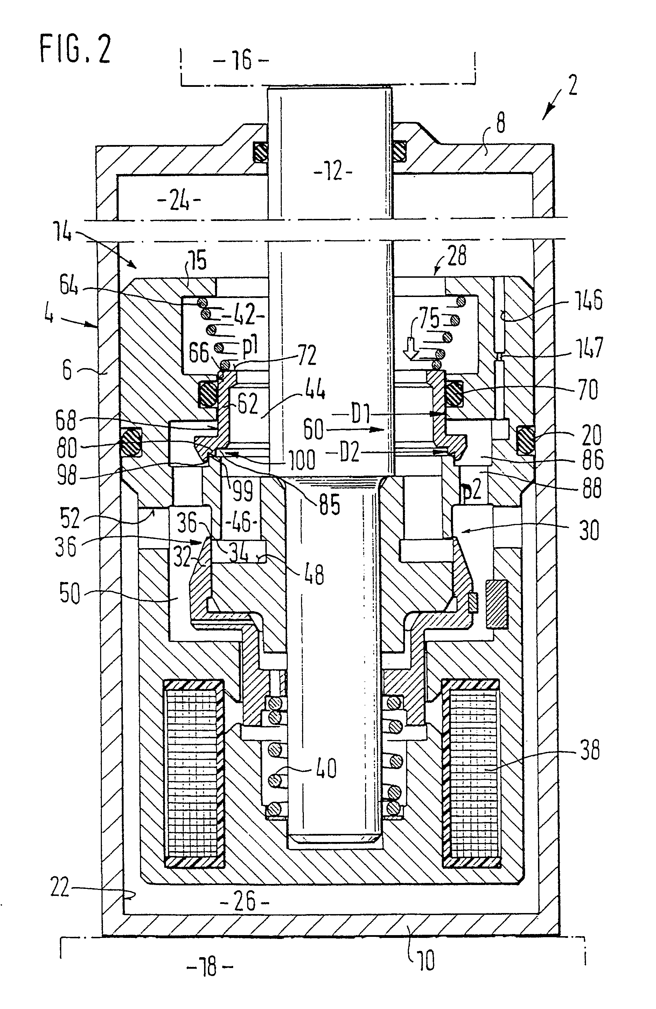

Ist bei dem ersten Ausführungsbeispiel nach Figur 1 der Druck p2 in der Kammer 86 größer als der Druck p1 in der Kammer 44 und erreicht die Druckdifferenz einen bestimmten Wert, so öffnet sich die Durchflußöffnung 100 des druckbetätigten Ventils 60. Ist jedoch der Druck p1 in der Kammer 44 größer als der Druck p2 in der Kammer 86, so bleibt das druckbetätigte Ventil 60 geschlossen und zwar unabhängig von der Druckdifferenz. Es ist aber auch möglich, das druckbetätigte Ventil 60 so zu gestalten, daß es öffnet, wenn der Druck p1 in der Kammer 44 größer ist als der Druck p2 in der Kammer 86. Die Figur 2 zeigt dafür ein Ausführungsbeispiel.

Die Figur 2 zeigt das zweite Ausführungsbeispiel. Hier ist der Durchmesser D2 der Dichtstelle 80 größer als der Durchmesser D1 des Führungsmantels 68 des Ventilkörpers 62. Das hier gezeigte druckbetätigte Ventil 60 öffnet deshalb seine Durchflußöffnung 100, wenn der Druck p1 in der Kammer 44 ausreichend größer ist als der Druck p2 in der Kammer 86, und das Druckmedium kann aus der Kammer 44 in Richtung der Kammer 86 strömen. Hierbei kann der Druck p1 in der Kammer 44 als zuströmseitiger Druck bezeichnet werden. Auch bei diesem Ausführungsbeispiel schließt sich in Strömungsrichtung an die Dichtstelle 80 die Zwischenkammer 99 und dann die Drosselstelle 98 an, bevor das Druckmedium in die Kammer 86 gelangt. Somit kann auch das druckbetätigte Ventil 60 des zweiten Ausführungsbeispiels den Druck p1 in der Kammer 44 ebenfalls unabhängig von der Größe des durchströmenden Druckmediumstromes konstant halten und zwar sinngemäß in gleicher Weise wie es bereits für das erste Ausführungsbeispiel nach Figur 1 beschrieben ist. Dem Fachmann ist es möglich, weitere zum ersten Ausführungsbeispiel anhand der Figuren 1 und 5 erwähnte Einzelheiten auf das zweite Ausführungsbeispiel nach Figur 2 entsprechend zu übertragen.

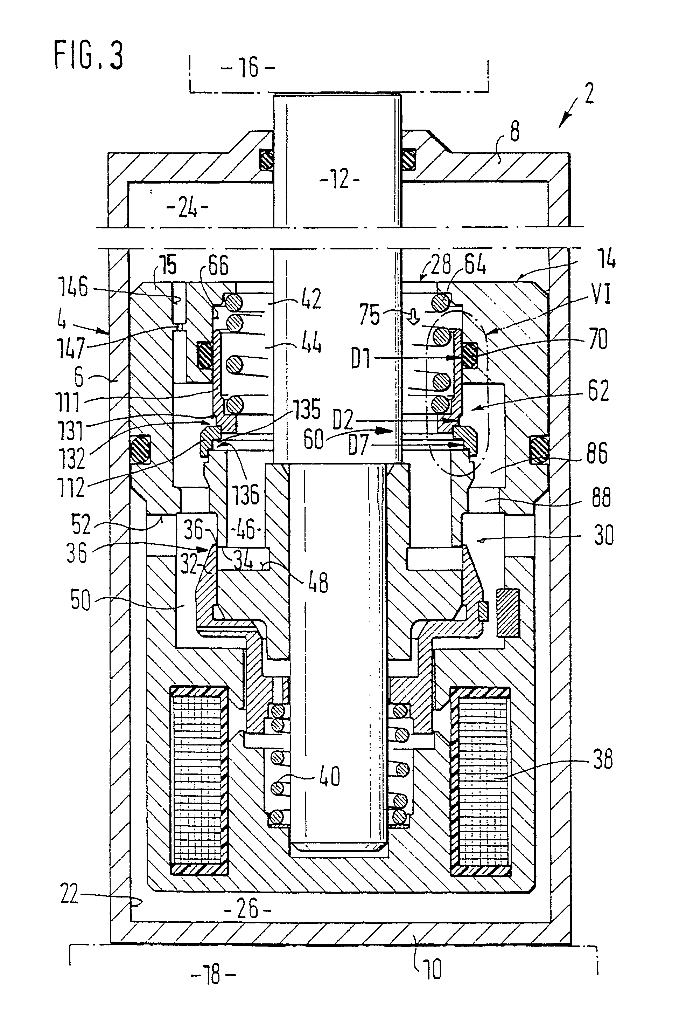

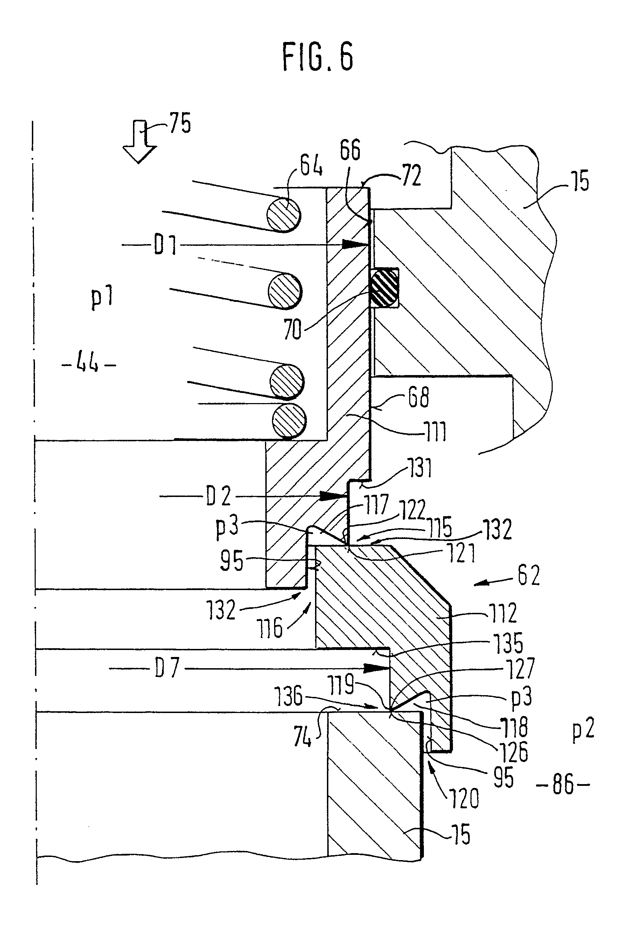

Ist in dem Stoßdämpfer 2 eines der anhand der ersten beiden Ausführungsbeispiele erläuterten druckbetätigten Ventile 60 eingebaut, so kann entweder der Druck p1 in der Kammer 44, d. h. im ersten Arbeitsraum 24 oder der Druck p2 in der Kammer 86, d. h. im zweiten Arbeitsraum 26 auf einen maximalen Wert begrenzt werden. Sollen die Drücke p1, p2 in beiden Arbeitsräumen 24, 26 mit dem druckbetätigten Ventil 60 begrenzt werden, so sind zwei der in den Figuren 1 und 2 dargestellten Ventile 60 in der Strömungsverbindung 28 des Stoßdämpfers 2 einzubauen. Da die druckbetätigten Ventile 60 relativ klein bauen und da das erforderliche Federelement 64 relativ schwach und damit klein gebaut sein kann, ist ein Einbau zweier druckbetätigter Ventile 60 im Stoßdämpfer 2 häufig problemlos möglich. Die nachfolgend anhand zweier weiterer Ausführungsbeispiele erläuterten Varianten des druckbetätigten Ventils 60 bieten den Vorteil, daß mit einem einzigen druckbetätigten Ventil 60 sowohl der Druck p1 im ersten Arbeitsraum 24 als auch der Druck p2 im zweiten Arbeitsraum 26 begrenzt werden kann. Bei den Ausführungsbeispielen 3 und 4 ist das druckbetätigte Ventil 60 in zwei Durchflußrichtungen durchströmbar. Die Figur 3 zeigt das dritte Ausführungsbeispiel. Hier umfaßt der Ventilkörper 62 ein erstes Ventilkörperteil 111 und ein zweites Ventilkörperteil 112. Ein Teil des in Figur 3 dargestellten druckbetätigten Ventils 60 ist mit einer strichpunktierten und mit VI bezeichneten Linie gekennzeichnet. Dieser Teil des druckbetätigten Ventils 60 ist in der Figur 6 zwecks Verdeutlichung mit geändertem Maßstab nochmals wiedergegeben.

Zwischen dem ersten Ventilkörperteil 111 und dem zweiten Ventilkörperteil 112 gibt es eine erste Dichtstelle 115 und eine erste Drosselstelle 116. Dazwischen wird eine erste Zwischenkammer 117 gebildet. Zwischen dem zweiten Ventilkörperteil 112 und dem Gehäuse 15 gibt es eine zweite Dichtstelle 119 und eine zweite Drosselstelle 120. Ebenfalls dazwischen bildet sich eine zweite Zwischenkammer 118. Die Drosselstellen 116 und 120 sind entsprechend Figur 6 ausgebildet. Bei geschlossenem, druckbetätigtem Ventil 60 trennen die Dichtstellen 115, 119 die Kammer 44 von der Kammer 86. Die zweite Dichtstelle 119 hat einen Durchmesser D7. Der Durchmesser der ersten Dichtstelle 115 wird auch hier mit D2 bezeichnet und der Durchmesser des Führungsmantels 68 des ersten Ventilkörperteils 111 wird mit D1 bezeichnet. Der Durchmesser D7 der zweiten Dichtstelle 119 ist größer als der Durchmesser D2 der ersten Dichtstelle 115. Ist der Druck p2 in der Kammer 86 größer als der Druck p1 in der Kammer 44 so wird, weil D7 größer als D2 ist, der zweite Ventilkörperteil 112 in Schließrichtung (Pfeil 75) gegen den Absatz 74 des Gehäuses 15 gedrückt; d. h. wenn p2 größer als p1 ist, dann ist die zweite Dichtstelle 119 geschlossen.

Bei geschlossener erster Dichtstelle 115 kommt ein in Form einer umlaufenden Kante ausgebildeter erster Ventilkörperdichtbereich 121 des ersten Ventilkörperteils 111 an einem dem ersten Ventilkörperdichtbereich 121 zugewandten ersten Gegendichtbereich 122 des zweiten Ventilkörperteils 112 zur Anlage. Bei geschlossener zweiter Dichtstelle 119 liegt ein in Form einer umlaufenden Kante mit dem Durchmesser D7 ausgebildeter zweiter Ventilkörperdichtbereich 126 des zweiten Ventilkörperteils 112 an einem an dem Absatz 74 des Gehäuses 15 sich bildenden zweiten Gegendichtbereich 127 an.

Der Durchmesser D2 der ersten Dichtstelle 115 ist kleiner als der Durchmesser D1 des Führungsmantels 68 des ersten Ventilkörperteils 111 des Ventilkörpers 62. Aus der Flächendifferenz der Fläche mit dem Durchmesser D1, abzüglich der Fläche mit dem Durchmesser D2, ergibt sich an dem ersten Ventilkörperteil 111 eine der Kammer 86 zugewandte erste wirksame Druckfläche 131. Über die Druckfläche 131 kann der in der Kammer 86 herrschende Druck p2 auf den ersten Ventilkörperteil 111 in Öffnungsrichtung (entgegen Pfeil 75) wirken. Ist der Druck p2 größer als der Druck p1, so wird, sobald die Druckdifferenz zwischen den beiden Drücken einen von der wirksamen Druckfläche 131 und von der Schließkraft des Federelementes 64 abhängigen Wert erreicht, der erste Ventilkörperteil 111 in Öffnungsrichtung betätigt, wodurch im Bereich der ersten Dichtstelle 115 zwischen dem ersten Ventilkörperteil 111 und dem zweiten Ventilkörperteil 112 eine erste Durchflußöffnung 132 freigegeben wird. In diesem Fall kann der Druck p2 in der Kammer 86 als der zuströmseitige Druck bezeichnet werden.

Ist der Druck p1 in der Kammer 44 größer als der Druck p2 in der Kammer 86, d. h. daß der Druck p1 in der Kammer 44 der zuströmseitige Druck ist, so ist die erste Durchflußöffnung 132 zwischen dem ersten Ventilkörperteil 111 und dem zweiten Ventilkörperteil 112 geschlossen, und das druckbetätigte Ventil 60 arbeitet in der Weise, wie wenn die beiden Ventilkörperteile 111 und 112 fest zusammengefügt wären, und es kann ab einer bestimmten Druckdifferenz zwischen dem Druck p1 und dem Druck p2 nur die zweite Dichtstelle 119 zwischen dem zweiten Ventilkörperteil 112 und dem Gehäuse 15 öffnen. Der Durchmesser D7 der zweiten Dichtstelle 119 ist größer als der Durchmesser D1 des Führungsmantels 68 des Ventilkörpers 62. Die sich daraus ergebende Differenz der Flächen bildet eine der Kammer 44 zugewandte zweite wirksame Druckfläche 135. Wegen der zweiten wirksamen Druckfläche 135 am zweiten Ventilkörperteil 112 kann ab einer bestimmten Differenzdruck die zweite Dichtstelle 119 zwischen dem zweiten Ventilkörperteil 112 und dem Gehäuse 15 öffnen, wodurch zwischen dem zweiten Ventilkörperteil 112 und dem Gehäuse 15 eine zweite Durchflußöffnung 136 freigegeben wird.

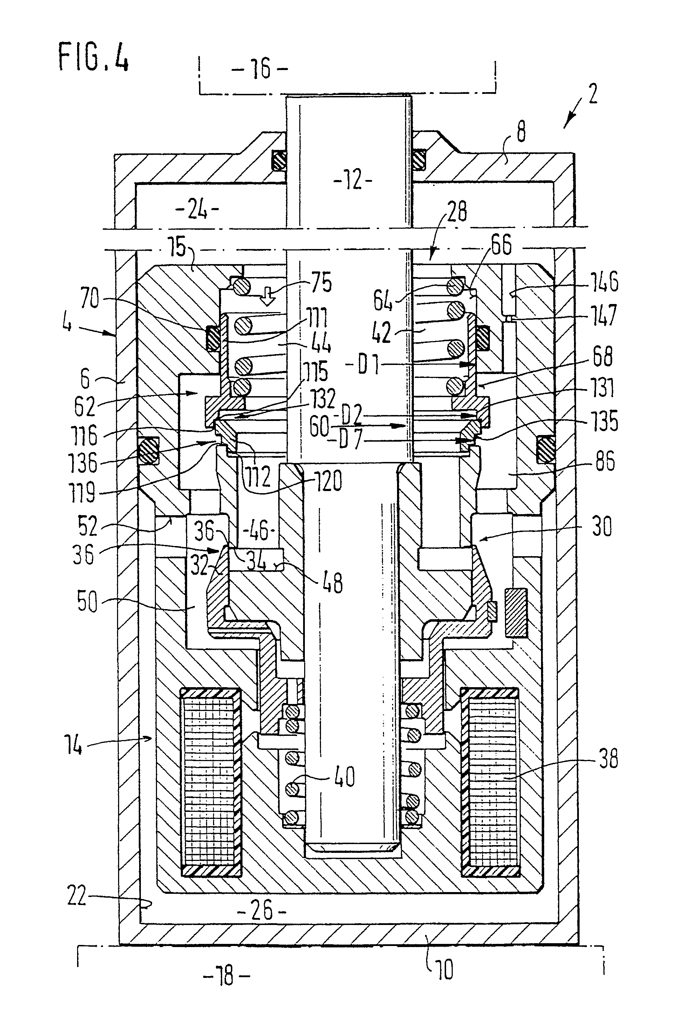

Die Figur 4 zeigt das vierte Ausführungsbeispiel. Hier ist als Unterschied zum dritten Ausführungsbeispiel (Figur 3) der Durchmesser D2 der ersten Dichtstelle 115 zwischen dem ersten Ventilkörperteil 111 und dem zweiten Ventilkörperteil 112 größer als der Durchmesser D1 des Führungsmantels 68, und der Durchmesser D7 der zweiten Dichtstelle 119 zwischen dem zweiten Ventilkörperteil 112 und dem Absatz 74 des Gehäuses 15 ist kleiner als der Durchmesser D1 des Führungsmantels 68 des Ventilkörpers 62. Somit ist hier die erste wirksame Druckfläche 131 des ersten Ventilkörperteils 111 der Kammer 44 zugewandt, und die zweite wirksame Druckfläche 135 des zweiten Ventilkörperteils 112 ist der Kammer 86 zugewandt. Damit wird, bei entsprechender Druckdifferenz, wenn der Druck p1 in der Kammer 44 größer ist als der Druck p2 in der Kammer 86, die erste Durchflußöffnung 132 freigegeben und es wird bei entsprechender Druckdifferenz, wenn der Druck p2 der Kammer 86 größer ist als der Druck p1 in der Kammer 44, die zweite Durchflußöffnung 136 zwischen dem zweiten Ventilkörperteil 112 und dem Gehäuse 15 geöffnet. Auch hier ist im Bereich der ersten Durchflußöffnung 132, in Durchflußrichtung betrachtet, die erste Drosselstelle 116 hinter der ersten Dichtstelle 115 angeordnet. Ebenso kommt, ebenfalls in Durchflußrichtung betrachtet, im Bereich der zweiten Durchflußöffnung 136 zuerst die zweite Dichtstelle 119 und dann die zweite Drosselstelle 120. Zwischen der ersten Dichtstelle 115 und der ersten Drosselstelle 116 befindet sich die erste Zwischenkammer 117 und zwischen der zweiten Dichtstelle 119 und zweiten Drosselstelle 120 befindet sich die zweite Zwischenkammer 118. Auch weitere, anhand der Figur 6 erläuterte Einzelheiten können sinngemäß auf das vierte Ausführungsbeispiel übertragen werden.

Die in den Figuren 3 und 4 dargestellten Ausführungsbeispiele bieten den zusätzlichen Vorteil, daß die Strömung des Druckmediums in den beiden möglichen Strömungsrichtungen beeinflußt werden kann. Da bei vielen Ausführungsarten des Stoßdämpfers 2 das Druckmedium mal aus dem ersten Arbeitsraum 24 in den zweiten Arbeitsraum 26 und mal in umgekehrter Richtung strömt, sind das dritte und das vierte Ausführungsbeispiel für eine Vielzahl von Stoßdämpfer-Ausführungsarten besonders gut geeignet.

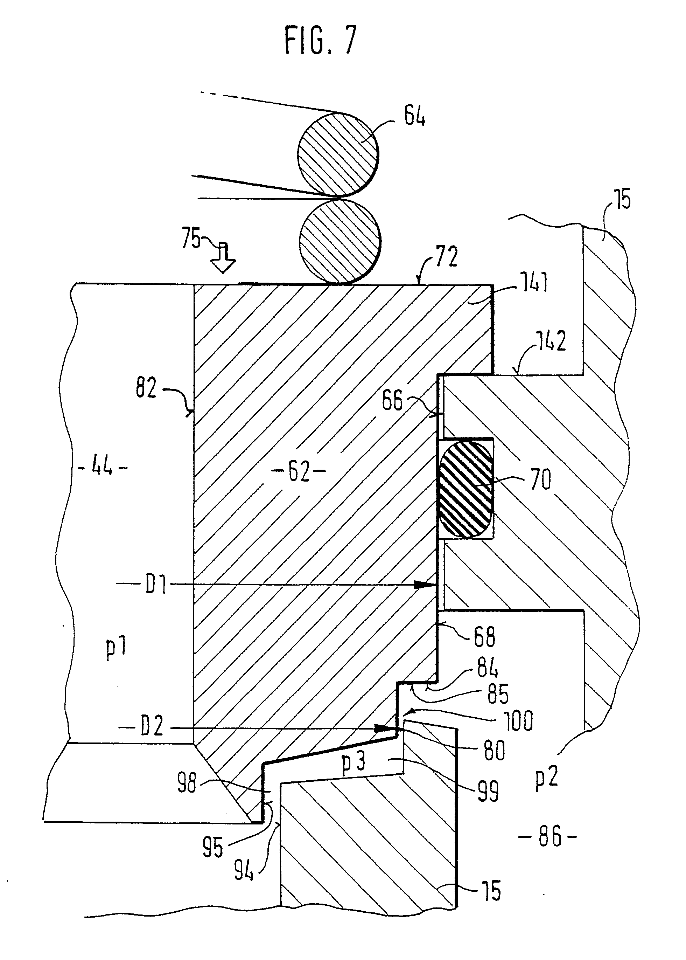

Bei den anhand der Figuren 1 bis 6 erläuterten vier Ausführungsbeispielen sind bei in Schließrichtung (Pfeil 75) betätigtem Ventilkörper 62 die Durchflußöffnungen 100, 132, 136 der jeweiligen Dichtstellen 80, 115, 119 im wesentlichen vollständig geschlossen weil der kantenförmig ausgebildete Ventilkörperdichbereich 76, 121, 126 an dem jeweiligen Gegendichtbereich 78, 122, 127 zur Anlage kommt. Das anhand der Figuren 1 bis 6 erläuterte druckbetätigte Ventil 60 gehört zur Gruppe der sogenannten Sitzventile. Es ist aber auch möglich, den Ventilkörper 62 bzw. die Ventilkörperteile 111, 112 des Ventilkörpers 62 schieberartig auszubilden, was anhand der Figur 7 erläutert werden soll.

Die Figur 7 zeigt eine weitere Möglichkeit zur Ausgestaltung des Ventilkörpers 62 des druckbetätigten Ventils 60 im Bereich der Durchflußöffnung 100 zwischen dem Ventilkörper 62 und dem Gehäuse 15. Bei der in Figur 7 dargestellten Variante ist der Ventilkörper 62 schieberartig ausgebildet. Bei in Schließrichtung (Pfeil 75) betätigtem Ventilkörper 62 kommt eine Schulter 141 des Ventilkörpers 62 an einem Absatz 142 des Gehäuses 15 in der Schließstellung zur Anlage. Der schieberartig ausgebildete Ventilkörper 62 überdeckt im Bereich der Dichtstelle 80 in axialer Richtung eine Kante am Gehäuse 15. Dabei ist im Bereich der Dichtstelle 80 ein Ringspalt vorhanden. Der Ringspalt im Bereich der Dichtstelle 80 ist verhältnismäßig niedrig, so daß ein mittlerer Durchmesser dieses Ringspaltes als Durchmesser D2 der ersten Dichtstelle 80 bezeichnet werden kann.

Bei vielen Anwendungsfällen, wie z. B. häufig bei Stoßdämpfern, ist es nicht unbedingt erforderlich, daß die Dichtstelle 80 vollständig abdichtet. Es ist nur erforderlich, den freien Querschnitt der Dichtstelle 80 so klein zu machen, daß die gewünschte Funktion des druckbetätigten Ventils 60 erfüllt wird. Damit der Zwischendruck p3 in der Zwischenkammer 99 nicht zu groß wird, wodurch das druckbetätigte Ventil 60 gegebenenfalls zu früh öffnen könnte, sollte der freie Querschnitt des Ringspalts im Bereich der Dichtstelle 80 deutlich kleiner sein als der ringförmige Querschnitt im Bereich der Drosselstelle 98. Bei dem in Figur 7 ausschnittsweise gezeigten druckbetätigten Ventil 60 ist auch bei in Schließrichtung (Pfeil 75) betätigtem Ventilkörper 62 eine Leckage vorhanden. Da der Querschnitt des Ringspalts im Bereich der Dichtstelle 80 kleiner ist als der Querschnitt der Drosselstelle 98, fällt der Druck im Bereich der Dichtstelle 80 deutlich stärker ab als im Bereich der Drosselstelle 98, so daß bei in Schließrichtung betätigtem Ventilkörper 62 in der Zwischenkammer 99 weitgehend der gleiche Druck herrscht wie in der Kammer 44.

Das in Figur 7 ausschnittsweise dargestellte druckbetätigte Ventil 60 kann auch in der Weise abgeändert werden, daß der Durchmesser D2 des Ringspaltes der Dichtstelle 80 größer ist als der Durchmesser D1 des Führungsmantels 68, so daß man in etwa gleiche Verhältnisse bekommt, wie bei dem in Figur 2 dargestellten zweiten Ausführungsbeispiel. Es ist aber auch möglich, die in der Figur 7 dargestellte Variante entsprechend den anhand der Figuren 3, 4 und 6 erläuterten Ausführungsbeispielen abzuwandeln und den Ventilkörper 62 in zwei Ventilkörperteile 111, 112 aufzuteilen, so daß mit dem erfindungsgemäßen druckbetätigten Ventil die Strömung des Druckmediums in beiden Strömungsrichtungen durchgelassen und dabei beeinflußt werden kann.

Bei dem Stoßdämpfer 2 kann neben der Strömungsverbindung 28 mit dem druckbetätigten Ventil 60 eine weitere Strömungsverbindung 146 mit z. B. einem weiteren druckbetätigten Ventil 147, einer Blende, einem elektromagnetisch betätigbaren Ventil oder dergleichen zwischen den beiden Arbeitsräumen 24, 26 vorhanden sein. Es können auch mehrere Strömungsverbindungen 146 vorhanden sein.

Das erfindungsgemäße druckbetätigte Ventil 60 kann auch in einer nicht in dem Dämpferkolben 14, sondern an anderer Stelle innerhalb oder außerhalb des Stoßdämpfers 2 vorgesehenen Strömungsverbindung angeordnet sein.

Das druckbetätigte Ventil 60 ist in der Strömungsverbindung 28 parallel zu der über den Steuerschieber 32 steuerbaren Drosselstelle 30 angeordnet. Zweckmäßigerweise wird man das druckbetätigte Ventil 60 so dimensionieren, daß im Normalfall die Dämpfungskraft des Stoßdämpfers 2 allein über die Drosselstelle 30 gesteuert wird, und nur bei Auftreten einer ungewöhnlich großen, die beiden Massen 16, 18 gegeneinander verschiebenden äußeren Kraft wird der Druck p1 bzw. p2 ausreichen, um das druckbetätigte Ventil 60 zu öffnen. Damit kann der Druck p1 bzw. p2 in den Arbeitsräumen 24, 26 auf einen unkritischen Wert begrenzt werden. Die ungewöhnlich große, die beiden Massen 16, 18 gegeneinander verschiebende Kraft kann z. B. auftreten, wenn der Stoßdämpfer 2 in einem Fahrzeug zwischen Fahrzeugaufbau und Fahrzeugachse eingebaut ist und wenn dieses Fahrzeug bei hoher Geschwindigkeit über ein hohes Hindernis fährt.

Das erfindungsgemäße druckbetätigte Ventil 60 kann aber auch als einziges Ventil in der Strömungsverbindung 28 des Stoßdämpfers 2 vorhanden sein. Das heißt, es können weitere Drosselstellen, wie z. B. die Drosselstelle 30 und damit auch der Steuerschieber 32 entfallen, und das druckbetätigte Ventil 60 kontrolliert als einziges die Dämpfungskraft des Stoßdämpfers 2 des Dämfungssystems.

Bei den dargestellten Ausführungsbeispielen (Figuren 1 bis 7) strömt das Druckmedium in wesentlichen radial von außen nach innen bzw. von innen nach außen durch die jeweilige Durchflußöffnung 100, 132, 136 im Bereich der Dichtstelle 80, 115, 119. Bevor das Druckmedium in die den abströmseitigen Druck enthaltende Kammer 44 bzw. 86 einströmt, wird es mehr oder weniger, je nachdem, wie weit der Ventilkörper 62 in Öffnungsrichtung betätigt ist, in axiale Richtung umgelenkt und zwar entgegen der Öffnungsrichtung. Das Druckmedium wird durch den Absatz 95 des Ventilkörpers 62 bzw. der Ventilkörperteile 111, 112 in axiale Richtung umgelenkt. Beide Effekte, d. h. Ausbildung des Zwischendruckes p3 in der jeweiligen Zwischenkammer 99, 117, 118 und die Umlenkung des Druckmediumstromes im Bereich des Absatzes 95, bewirken folgenden Vorteil: Bei geschlossenem, druckbetätigtem Ventil 60 ist allein die Größe der jeweiligen wirksamen Druckfläche 85 bzw. 131 bzw. 135 für das Öffnen des Ventils 60 verantwortlich. Sobald jedoch der Ventilkörper 62 bzw. einer der Ventilkörperteile 111, 112 mindestens etwas in Öffnungsrichtung bewegt wird, steigt die Öffnungskraft. Damit kann die Zunahme der Schließkraft des Federelements 64 mindestens teilweise kompensiert bzw. überkompensiert werden. Damit ist z. B. ein Konstanthalten des zuströmseitigen Druckes möglich, unabhängig von der Größe des Druckmediumstromes. Je nach Dimensionierung des Ventils 60 ist der eine Effekt oder der andere Effekt von größerer Bedeutung.

Ein besonderer Vorteil ist, daß bei allen Ausführungsbeispielen (Figuren 1 bis 7), bei gegebenem zuströmseitigen Druck, für die Öffnungskraft allein die Größe der jeweiligen wirksamen Druckfläche 85, 131, 135 von Einfluß ist. Die wirksame Druckfläche 85, 131, 135 ist vollkommen unabhängig von der jeweils öffenbaren Durchflußöffnung 100, 132, 136. Bei Dimensionierung des Federelementes 64 muß weitgehend nur die Größe der jeweils wirksamen Druckfläche 85, 131, 135 berücksichtigt werden. So kann man z. B. die Durchmesserdifferenz zwischen D1 und D2 bzw. D1 und D7 und damit die wirksame Druckfläche 85 bzw. 131 bzw. 135 klein wählen, wodurch zur Absicherung eines hohen zuströmseitigen Druckes ein schwaches und damit kleines Federelement 64 genügt und trotzdem kann eine große Durchflußöffnung 100, 132, 136 öffenbar sein.

Um die Reibung zwischen dem Ventilkörper 62 und dem Gehäuse 15 so klein wie möglich zu halten, kann gegebenenfalls auf das Dichtelement 70 verzichtet werden.

Die Ausführungsformen des druckbetätigten Ventils 60 nach den Figuren 3, 4 und 6 haben den weiteren Vorteil, daß mit einem einzigen druckbetätigten Ventil 60 die Druckmediumströmung in beiden Richtungen beeinflußt werden kann. Vorteilhafterweise ist dazu nur ein Federelement 64 erforderlich. Trotzdem kann z. B. bei Strömung des Druckmediums aus dem ersten Arbeitsraum 24 in den zweiten Arbeitsraum 26 der zuströmseitige Druck, d. h. der Druck p1 in der Kammer 44 bzw. in dem ersten Arbeitsraum 24 auf einen hohen Wert gebracht werden und bei Strömung des Druckmediums aus dem zweiten Arbeitsraum 26 in den ersten Arbeitsraum 24 kann der zuströmseitige Druck, d. h. der Druck p2 in der Kammer 86 bzw. in dem zweiten Arbeitsraum 26 sehr klein gehalten werden. Dies wird bei dem Ausführungsbeispiel nach Figur 3 und 6 dadurch erreicht, daß man die wirksame Druckfläche 131 am ersten Ventilkörperteil 111 relativ groß und die wirksame Druckfläche 135 am zweiten Ventilkörperteil 112 relativ klein wählt. Bei dem Ausführungsbeispiel nach Figur 4 erreicht man das gleiche, wenn man für das beispielhaft genannte Druckverhältnis die wirksame Druckfläche 131 relativ klein und die wirksame Druckfläche 135 relativ groß wählt. Somit sind die beiden jeweiligen zuströmseitigen Drücke p1 und p2 für beide Strömungsrichtungen unabhängig voneinander steuerbar.

Das druckbetätigte Ventil 60 ist für Stoßdämpfer, insbesondere für sogenannte Einrohrstoßdämpfer und auch für sogenannte Zweirohrstoßdämpfer besonders gut geeignet.

## Ansprüche

1. Druckbetätigtes Ventil mit einem innerhalb eines Gehäuses in eine Schließrichtung und in eine Öffnungsrichtung betätigbaren Ventilkörper, der durch eine Schließkraft eines Federelementes in die Schließrichtung bewegbar ist und der durch eine Öffnungskraft eines auf eine wirksame Druckfläche des Ventilkörpers wirkenden zuströmseitigen Druckes eines Druckmediums in die Öffnungsrichtung betätigbar ist, wobei ein an dem Ventilkörper vorgesehener Ventilkörperdichtbereich und ein an einem gegenüber dem Gehäuse feststehenden Teil vorhergesehener Gegendichtbereich zusammen eine zwei Kammern voneinander, je nach Stellung des Ventilkörpers mehr oder weniger trennende Dichtstelle bilden, dadurch gekennzeichnet, daß durch Betätigung des Ventilkörpers (62, 111, 112) in die Öffnungs- bzw. Schließrichtung eine, eine Strömung zwischen den beiden Kammern (44, 86) bestimmende Durchflußöffnung (100, 132, 136) steuerbar ist, wobei diese Durchflußöffnung unabhängig ist von der wirksamen Druckfläche (85, 131, 135) des Ventilkörpers (62, 111, 112).

2. Druckbetätigtes Ventil nach Anspruch 1, dadurch gekennzeichnet, daß in Strömungsrichtung hinter der Dichtstelle (80, 115, 119) eine Drosselstelle (98, 116, 120) vorgesehen ist, wobei bei mindestens teilweise in Öffnungsrichtung betätigtem Ventilkörper (62, 111, 112) zwischen der Dichtstelle (80, 115, 119) und der Drosselstelle (98, 116, 120) ein die Öffnungskraft zusätzlich unterstützender Zwischendruck (p3) sich ausbildet.

3. Druckbetätigtes Ventil nach Anspruch 1 oder 2, dadurch gekennzeichnet, daß das durch die Durchflußöffnung (100, 132, 136) strömende Druckmedium im Bereich des Ventilkörpers (62, 111, 112) im wesentlichen in axiale Richtung umlenkbar ist.

4. Druckbetätigtes Ventil nach Anspruch 1, 2 oder 3, dadurch gekennzeichnet, daß das druckbetätigte Ventil (60) in zwei entgegengesetzten Strömungsrichtungen durchströmbar ist.

5. Druckbetätigtes Ventil nach einem der vorhergehenden Ansprüche, dadurch gekennzeichnet, daß der Ventilkörper (62) einen ersten Ventilkörperteil (111) und einen zweiten Ventilkörperteil (112) umfaßt, wobei bei Strömung des Druckmediums in eine der beiden Strömungsrichtungen die steuerbare Durchflußöffnung (132) zwischen den beiden Ventilkörperteilen (111, 112) sich bildet.

6. Druckbetätigtes Ventil nach Anspruch 5, dadurch gekennzeichnet, daß die Durchflußöffnung (132, 136) für beide Strömungsrichtungen mit Hilfe eines Federelementes (64) steuerbar ist.

7. Druckbetätigtes Ventil nach Anspruch 5 oder 6, dadurch gekennzeichnet, daß bei der einen Strömungsrichtung die wirksame Druckfläche (131) an dem ersten Ventilkörperteil (111) und bei der anderen Strömungsrichtung die wirksame Druckfläche (135) an dem zweiten Ventilkörperteil (112) sich bildet.

8. Druckbetätigtes Ventil nach einem der Ansprüche 5 bis 7, dadurch gekennzeichnet, daß für beide Strömungsrichtungen die wirksame Druckfläche (131, 135) verschieden groß ist.

9. Druckbetätigtes Ventil nach einem der vorhergehenden Ansprüche, dadurch gekennzeichnet, daß die Strömung zumindest ein Teil einer zwischen Arbeitsräumen (24, 26) eines Dämpfungssystems sich austauschenden Druckmediumstromes ist.

10. Druckbetätigtes Ventil nach Anspruch 8, dadurch gekennzeichnet, daß mit dem druckbetätigten Ventil (60) eine Dämpfungskraft des Dämpfungssystems beeinflussbar ist.

FIG.1

FIG. 2

FIG.3

FIG.4

FIG. 5

# FIG. 6

# FIG. 7